# EUROPEAN PATENT APPLICATION

(11) **EP 4 760 368 A2**
(43) Date of publication of application: **17.06.2026**
(21) Application number: 25222121.3
(22) Date of filing: 10.12.2025
(51) Int. Cl.: G02B 6/42

(54) **PHOTOELECTRIC CONVERSION DEVICE AND MANUFACTURING METHOD THEREOF**

(30) Priority: 12.12.2024 US 202463733101 P; 02.07.2025 TW 114125062
(71) Applicant: Formerica OptoElectronics Inc., Zhubei City, Hsinchu 30265 (TW)
(72) Inventor: HUANG, Yun-Cheng, 320044 Taoyuan City (TW); YEH, Hung-Fu, Hsinchu City (TW); CHEN, Yu-Jen, 710 Tainan City (TW); CHAO, Ling Yu, 330048 Taoyuan City (TW)
(74) Representative: Becker, Eberhard

(57) **Abstract**

A photoelectric conversion device and manufacturing method thereof are provided. The photoelectric conversion device comprises a photoelectric conversion module and a sealed space, wherein the photoelectric conversion module is configured to perform photoelectric conversion processing within the sealed space. In this manner, when the photoelectric conversion device operates while immersed in a cooling liquid, the sealed space can prevent the cooling liquid from infiltrating it and affecting the photoelectric conversion processing of the photoelectric conversion module, effectively improving the operational efficiency and service life of the photoelectric conversion device.

## Description

### CROSS-REFERENCE TO RELATED APPLICATIONS

This application claims the priority of United States Patent Application No. 63733101 filed on December 12, 2024 and the priority of Republic of China Patent Application No.114125062 filed on July 2, 2025, in the State Intellectual Property Office of the R.O.C., the disclosure of which is incorporated herein by reference.

### BACKGROUND OF THE INVENTION

### Field of the Invention

The present application relates to a fiber communication device and, more particularly, to a photoelectric conversion device that is operable while being immersed in a cooling liquid and is capable of preventing the cooling liquid from infiltrating and affecting its operation.

### Descriptions of the Related Art

With the rapid development of network technologies, fiber communication technologies have gradually replaced conventional electrical communication technologies used for signal transmission, because fiber communication offers many advantages for data transmission, such as high transmission speed, long transmission distance, resistance to electromagnetic interference, and high security. Therefore, the fiber communication industry has become the primary communication technology in modern development and is widely applied to information communication among various industries or devices. As a result, the bandwidth and speed requirements for fiber communication continue to increase.

For example, fiber network equipment in the fiber communication industry is often used together with a photoelectric conversion device, such that a photoelectric conversion module of the photoelectric conversion device performs photoelectric conversion processing on transmitted data, thereby enabling the fiber network equipment to achieve high-capacity and high-speed data transmission.

Since the fiber network equipment typically operates continuously around the clock, the photoelectric conversion device must also operate continuously for long periods. This causes the operating temperature of the photoelectric conversion device to rise easily, so heat dissipation is essential. To dissipate heat, the photoelectric conversion device is commonly immersed in a cooling liquid having high thermal conductivity, such that the photoelectric conversion device operates in a liquid cooling environment, allowing the cooling liquid to rapidly remove heat generated during operation and maintain an appropriate operating temperature of the photoelectric conversion device, thereby improving the performance and lifespan of the photoelectric conversion device.

However, when the photoelectric conversion device is immersed in the cooling liquid and operates in the liquid cooling environment, certain problems may arise. For example, the cooling liquid may infiltrate the photoelectric conversion device and affect the photoelectric conversion performed by the photoelectric conversion module, thereby causing the photoelectric conversion device to fail to operate properly.

In view of the foregoing, how to improve the existing photoelectric conversion device so as to prevent the cooling liquid from infiltrating the photoelectric conversion device during its operation in the liquid cooling environment is an urgent problem that those skilled in the art need to solve.

### SUMMARY OF THE INVENTION

n view of the various problems of the prior art, a primary objective of the present application is to provide a photoelectric conversion device that is capable of preventing a cooling liquid from infiltrating into the photoelectric conversion device while performing heat dissipation via the cooling liquid.

In view of the drawbacks of the prior art mentioned above, the present application provides a photoelectric conversion device configured to be coupled with a data transmission component in a liquid cooling environment so as to transmit data and perform a photoelectric conversion process on the data, wherein the photoelectric conversion device comprises: at least one photoelectric conversion module comprising a photoelectric conversion module coupling portion and a photoelectric conversion module data processing portion; at least one device base comprising a coupling portion base accommodating space and a data processing portion base accommodating space, the device base being configured to support the photoelectric conversion module, such that the photoelectric conversion module coupling portion is accommodated in the coupling portion base accommodating space and is coupled with the data transmission component in the liquid cooling environment to transmit the data, and the photoelectric conversion module data processing portion is accommodated in the data processing portion base accommodating space; at least one device cover assembled with the device base to cover the data processing portion base accommodating space; at least one partition component located between the device base and the device cover to separate the coupling portion base accommodating space from the data processing portion base accommodating space; at least one adhesive material configured to adhere the device base to the device cover, adhere the device cover to the partition component, adhere the device base to the partition component, and adhere the partition component to the photoelectric conversion module, so as to make the data processing portion base accommodating space become a sealed space and to allow the photoelectric conversion module data processing portion to perform the photoelectric conversion process on the data in the sealed space; and at least one soldering material configured to solder the device base and the device cover so as to join the device base and the device cover into a single piece, the soldering material further being configured to solder the device cover and the partition component so as to join the device cover and the partition component into a single piece, and the soldering material further being configured to solder the device base and the partition component so as to join the device base and the partition component into a single piece.

Preferably, the photoelectric conversion device said above, wherein the adhesive material is an epoxy resin (EPOXY).

Preferably, the photoelectric conversion device said above, wherein the photoelectric conversion device is an SFP series (Small Form-Factor Pluggable), QSFP series (Quad Small Form-Factor Pluggable), QSFP-DD series (Quad Small Form-Factor Pluggable Double Density), OSFP series (Octal Small Form-factor Pluggable), LPO series, ELSFP series, CFP series, CPO series, COBO series or OSFP-XD series photoelectric conversion device.

Preferably, the photoelectric conversion device said above, wherein the device base further comprises a base adhesive receiving trench, and the device cover comprises a cover adhesion structure, wherein the base adhesive receiving trench is configured to receive the adhesive material, and the cover adhesion structure is configured to enter the base adhesive receiving trench to be adhered to the adhesive material in the base adhesive receiving trench.

Preferably, the photoelectric conversion device said above, further comprising an elastic material located between the device base and the device cover to fill a gap between the device base and the device cover, so as to further make the data processing portion base accommodating space become the sealed space.

Preferably, the photoelectric conversion device said above, wherein the elastic material is further provided between the device cover and the partition component to fill a gap between the device cover and the partition component; and the elastic material is further provided between the device base and the partition component to fill a gap between the device base and the partition component, so as to further make the data processing portion base accommodating space become the sealed space.

Preferably, the photoelectric conversion device said above, wherein the device base further comprises a base elastic material insertion trench configured to be filled with the elastic material.

Preferably, the photoelectric conversion device said above, wherein the device cover further comprises a cover elastic material insertion trench configured to be filled with the elastic material.

Preferably, the photoelectric conversion device said above, further comprising an inert gas configured to fill the sealed space, so as to allow the photoelectric conversion module data processing portion to perform the photoelectric conversion process on the data in an environment with the inert gas.

Preferably, the photoelectric conversion device said above, wherein the inert gas is helium.

Additionally, the present application provides a photoelectric conversion device configured to be coupled with a data transmission component in a liquid cooling environment so as to transmit data and perform a photoelectric conversion process on the data, wherein the photoelectric conversion device comprises: at least one photoelectric conversion module comprising a photoelectric conversion module coupling portion and a photoelectric conversion module data processing portion; at least one device base configured to support the photoelectric conversion module; at least one device cover comprising a coupling portion cover accommodating space and a data processing portion cover accommodating space, and the device cover being assembled with the device base, such that the photoelectric conversion module coupling portion is accommodated in the coupling portion cover accommodating space, and the photoelectric conversion module data processing portion is accommodated in the data processing portion cover accommodating space; at least one partition component located between the device base and the device cover to separate the coupling portion cover accommodating space from the data processing portion cover accommodating space; at least one adhesive material configured to adhere the device base to the device cover, adhere the device cover to and the partition component, adhere the device base to the partition component, and adhere the partition component to the photoelectric conversion module, so as to make the data processing portion cover accommodating space become a sealed space and to allow the photoelectric conversion module data processing portion to perform the photoelectric conversion process on the data in the sealed space; and at least one soldering material configured to solder the device base and the device cover so as to join the device base and the device cover into a single piece, the soldering material further being configured to solder the device cover and the partition component so as to join the device cover and the partition component into a single piece, and the soldering material further being configured to solder the device base and the partition component so as to join the device base and the partition component into a single piece.

Additionally, the present application provides a manufacturing method of a photoelectric conversion device, comprising: providing an inert gas environment and a sealed state detection environment, with an inert gas being contained in the inert gas environment, wherein the inert gas is not contained in the sealed state detection environment initially; providing at least one photoelectric conversion module, at least one device base, at least one device cover, and at least one partition component, wherein the photoelectric conversion module comprises a photoelectric conversion module data processing portion; allowing the photoelectric conversion module, the device base, the device cover, and the partition component to be assembled in the inert gas environment to form the photoelectric conversion device, and providing the photoelectric conversion device with a data processing portion device accommodating space for accommodating the photoelectric conversion module data processing portion, wherein the inert gas is present in the data processing portion device accommodating space; and allowing the photoelectric conversion device to leave the inert gas environment and enter the sealed state detection environment, and detecting whether the inert gas is found in the sealed state detection environment; wherein if the inert gas is found, this indicates that the data processing portion device accommodating space is not sealed and the photoelectric conversion device is a defective product; if the inert gas is not found, this indicates that the data processing portion device accommodating space is sealed, and the photoelectric conversion device is a qualified product.

Compared to the prior art, the photoelectric conversion device of the present application comprises a photoelectric conversion module and a sealed space, wherein the photoelectric conversion module is configured to perform photoelectric conversion processing within the sealed space. In this manner, when the photoelectric conversion device operates while immersed in a cooling liquid, the sealed space can prevent the cooling liquid from infiltrating and thereby affecting the photoelectric conversion of the photoelectric conversion module, thereby effectively improving the operational efficiency and service life of the photoelectric conversion device.

### BRIEF DESCRIPTION OF THE DRAWINGS

The above and other aspects, features and other advantages of the present invention will be more clearly understood from the following detailed description taken in conjunction with the accompanying drawings, in which:
Figure 1 is a schematic diagram showing a state in which the photoelectric conversion module of the present application is immersed in a cooling liquid.
Figure 2 is a perspective schematic diagram showing the photoelectric conversion module of the present application according to one embodiment.
Figure 3 is a perspective schematic diagram showing a first viewing angle of the photoelectric conversion module of the present application according to one embodiment.
Figure 4 is a perspective schematic diagram showing a second viewing angle of the photoelectric conversion module of the present application according to one embodiment.
Figure 5 is a rear schematic diagram showing the photoelectric conversion module of the present application according to one embodiment.
Figure 6 is a sectional schematic diagram showing the photoelectric conversion module of the present application according to one embodiment.
Figure 7 is a sectional schematic diagram showing the photoelectric conversion module of the present application according to one embodiment.
Figure 8 is a sectional schematic diagram showing the photoelectric conversion module of the present application according to one embodiment.
Figure 9 is a sectional schematic diagram showing the photoelectric conversion module of the present application according to one embodiment.
Figure 10 is a sectional schematic diagram showing the photoelectric conversion module of the present application according to one embodiment.
Figure 11 is a sectional schematic diagram showing the photoelectric conversion module of the present application according to one embodiment.
Figure 12 is a sectional schematic diagram showing the photoelectric conversion module of the present application according to one embodiment.
Figure 13 is a schematic diagram showing a state of the photoelectric conversion module of the present application in an inert gas environment.
Figure 14 is a schematic diagram showing a state of the photoelectric conversion module of the present application in a sealed state detection environment.
Figure 15 is a flowchart illustrating a manufacturing method of the photoelectric conversion device of the present application.

### DETAILED DESCRIPTION OF THE PREFERRED EMBODIMENT

Embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In addition, it should be noted that, in order to make the disclosed content more concise and easier to understand, components having the same or similar functions in the following embodiments will be denoted by the same reference symbols, and descriptions of identical or equivalent features will be omitted.

The present application provides a photoelectric conversion device and a manufacturing method thereof. The photoelectric conversion device comprises a photoelectric conversion module and a sealed space, and the photoelectric conversion module can perform photoelectric conversion processing in the sealed space. Thus, when the photoelectric conversion device operates while being immersed in a cooling liquid, infiltration of the cooling liquid can be prevented so as not to affect the photoelectric conversion performed by the photoelectric conversion module, thereby effectively improving the operating efficiency and lifespan of the photoelectric conversion device.

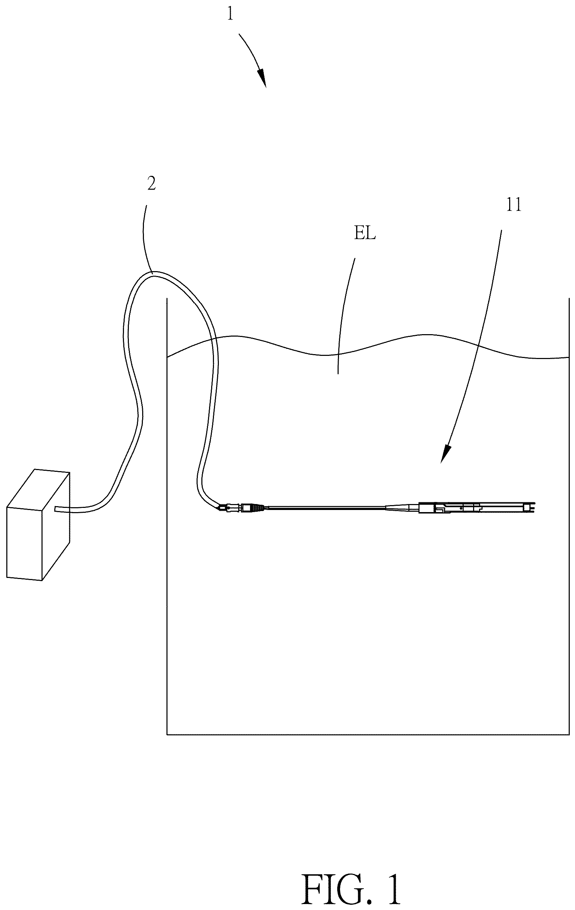

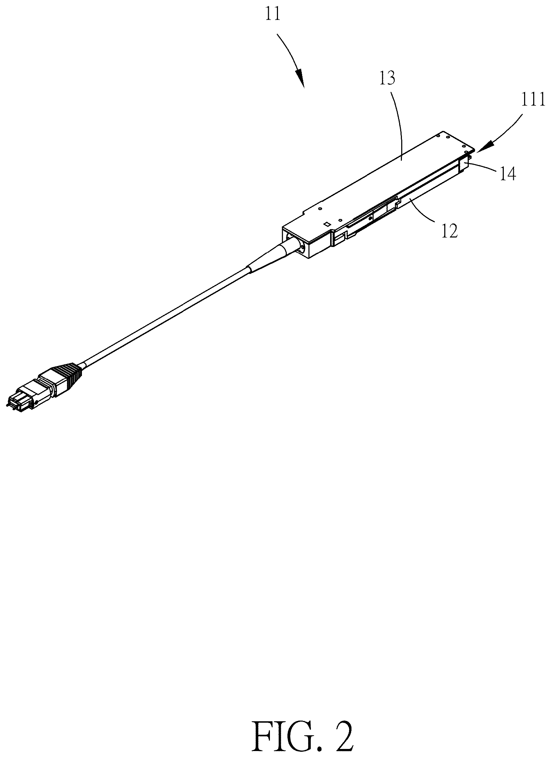

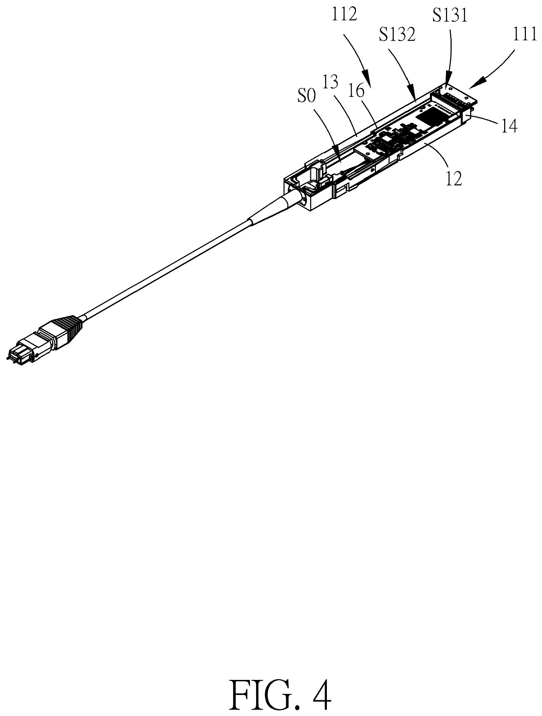

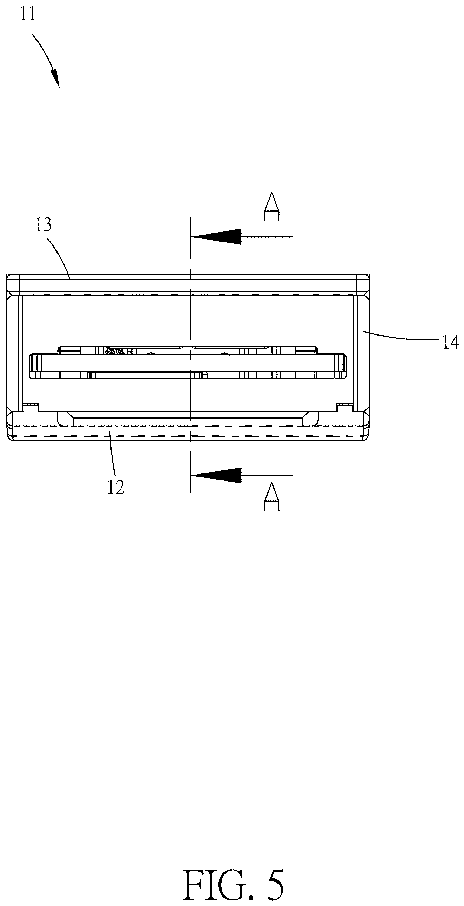

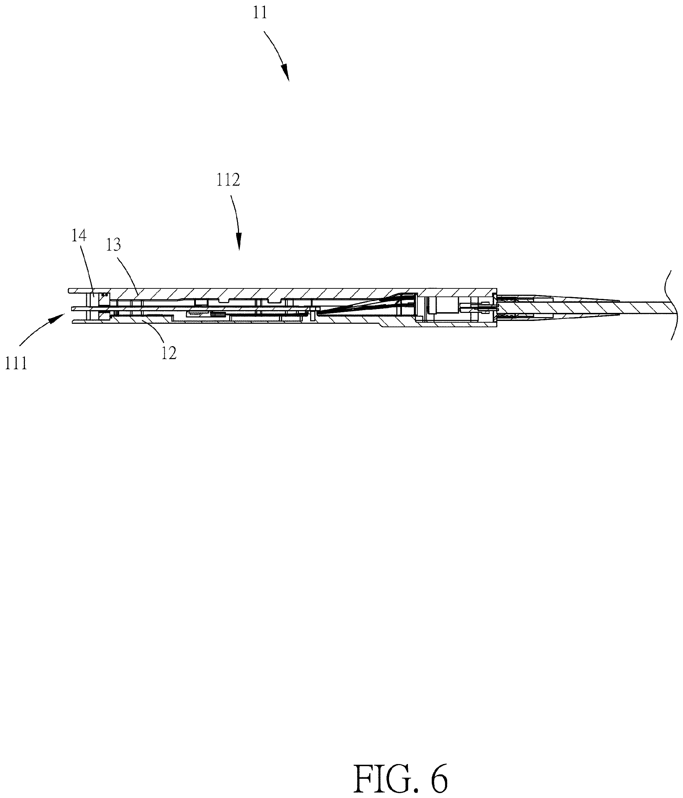

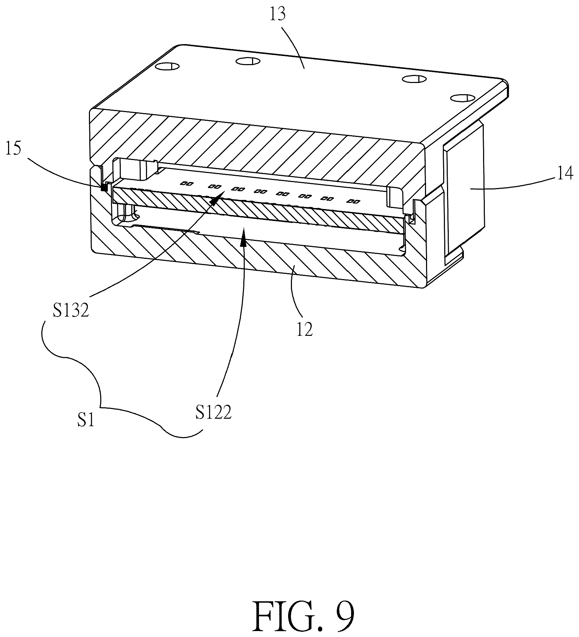

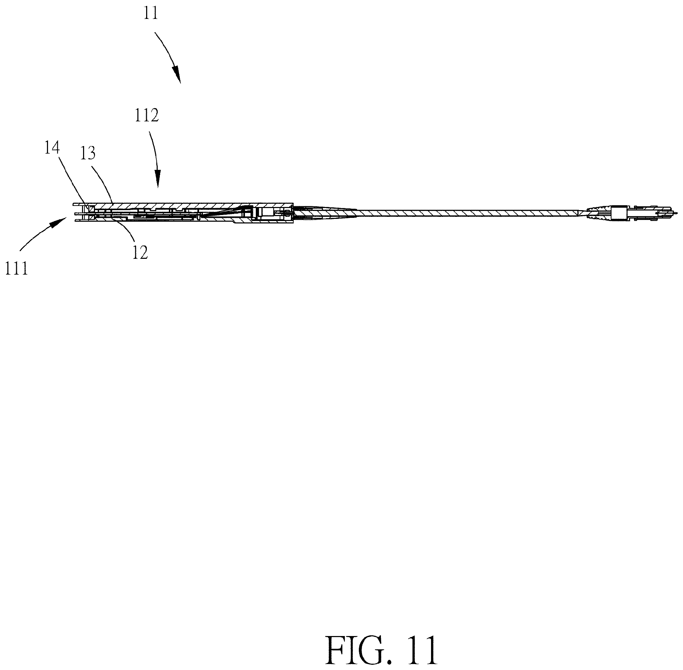

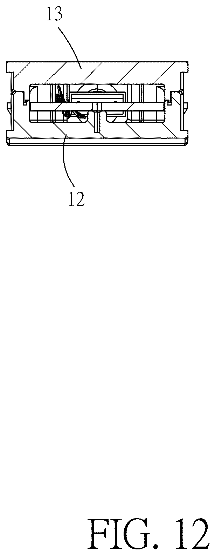

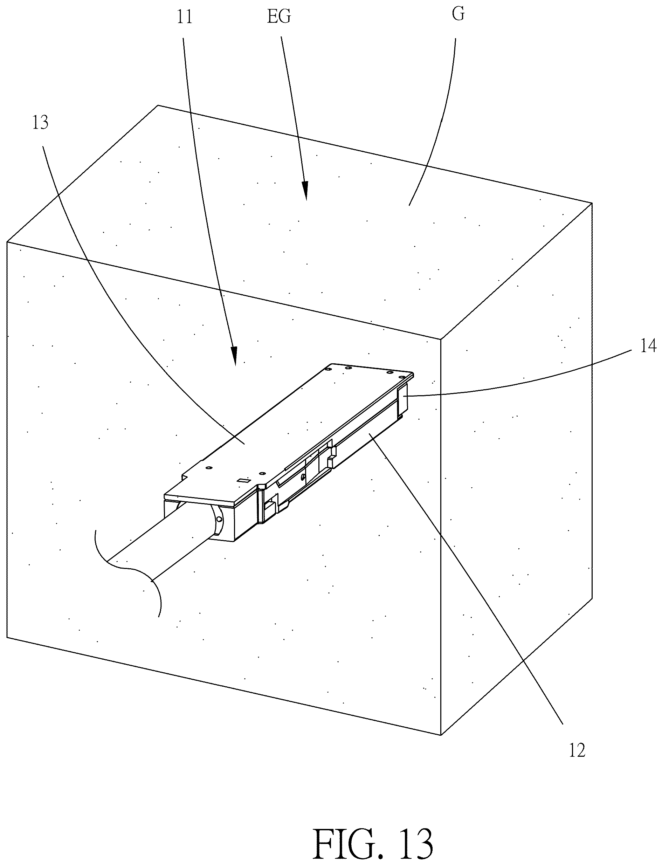

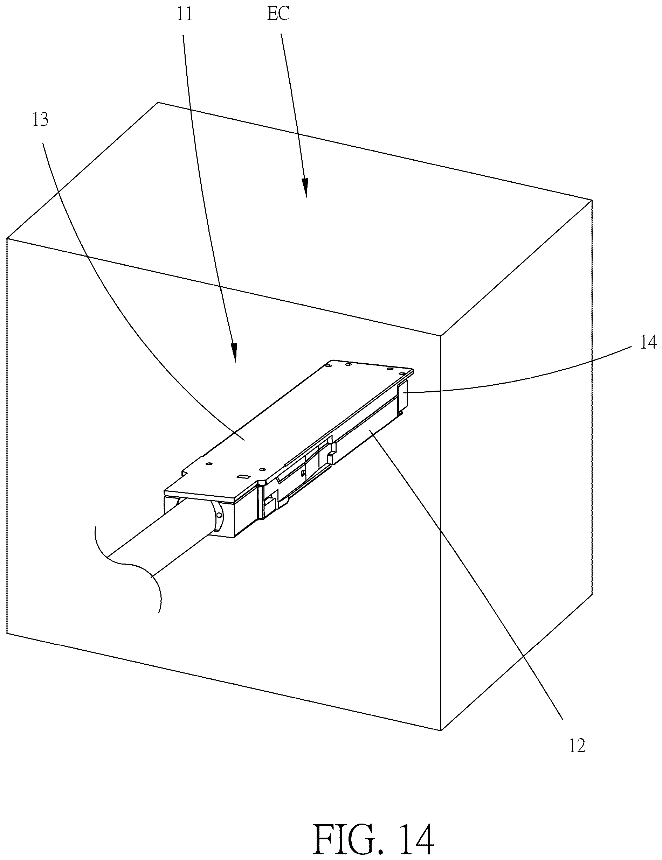

Descriptions of the embodiments disclosed in the present application should be read together with figure 1 to figure 15.

In the embodiments shown in figure 1 to figure 15, a photoelectric conversion device 1 is provided. The photoelectric conversion device 1 is configured to be coupled with a data transmission component 2 in a liquid cooling environment EL so as to transmit a data and to perform photoelectric conversion processing on the data. The photoelectric conversion device 1 comprises: a photoelectric conversion module 11, a device base 12, a device cover 13, a partition component 14, an adhesive material 15, and a soldering material 16.

It should be noted that the photoelectric conversion device 1 may, for example, be a photoelectric conversion device of an SFP series (Small Form-Factor Pluggable), a QSFP series (Quad Small Form-Factor Pluggable), a QSFP-DD series (Quad Small Form-Factor Pluggable Double Density), an OSFP series (Octal Small Form-factor Pluggable), an LPO series, an ELSFP series, a CFP series, a CPO series, a COBO series, or an OSFP-XD series.

In the above embodiments, regarding the photoelectric conversion module 11, the photoelectric conversion module 11 comprises a photoelectric conversion module coupling portion 111 and a photoelectric conversion module data processing portion 112. Regarding the device base 12, the device base 12 comprises a coupling portion base accommodating space S121 and a data processing portion base accommodating space S122.

It should be noted that, in the above embodiments, the device base 12 is configured to support the photoelectric conversion module 11, such that the photoelectric conversion module coupling portion 111 is accommodated in the coupling portion base accommodating space S121 to allow the data transmission component 2 to be plugged in the liquid cooling environment EL so as to transmit the data, and such that the photoelectric conversion module data processing portion 112 is accommodated in the data processing portion base accommodating space S122.

In the above embodiments, regarding the device cover 13, the device cover 13 comprises a coupling portion cover accommodating space S131 and a data processing portion cover accommodating space S132, and the device cover 13 is combined with the device base 12 to cover the data processing portion base accommodating space S122, such that the photoelectric conversion module coupling portion 111 is accommodated in the coupling portion cover accommodating space S131, and such that the photoelectric conversion module data processing portion 112 is accommodated in the data processing portion cover accommodating space S132.

It should be noted that, in the present application, the coupling portion base accommodating space S121 and the data processing portion base accommodating space S122 may optionally be omitted, such that the photoelectric conversion module coupling portion 111 is accommodated in the coupling portion cover accommodating space S131, and the photoelectric conversion module data processing portion 112 is accommodated in the data processing portion cover accommodating space S132. However, the above is not limiting. For example, the coupling portion cover accommodating space S131 and the data processing portion cover accommodating space S132 may optionally be omitted, such that the photoelectric conversion module coupling portion 111 is accommodated in the coupling portion base accommodating space S121, and the photoelectric conversion module data processing portion 112 is accommodated in the data processing portion base accommodating space S122.

Regarding the partition component 14, the partition component 14 is located between the device base 12 and the device cover 13 to separate the coupling portion base accommodating space S121 from the data processing portion base accommodating space S122, and also to separate the coupling portion cover accommodating space S131 from the data processing portion cover accommodating space S132.

It should be noted that, in the above embodiments, the adhesive material 15 can bond the device base 12 and the device cover 13 so that the device base 12 and the device cover 13 are sealed together. The adhesive material 15 can further bond the device cover 13 and the partition component 14 so that the device cover 13 and the partition component 14 are sealed together. The adhesive material 15 can further bond the device base 12 and the partition component 14 so that the device base 12 and the partition component 14 are sealed together. The adhesive material 15 can further bond the partition component 14 and the photoelectric conversion module 11 so that the partition component 14 and the photoelectric conversion module 11 are sealed together, thereby making the data processing portion base accommodating space S122 and the data processing portion cover accommodating space S132 form a sealed space S0 into which the cooling liquid cannot infiltrate. Thus, the photoelectric conversion module data processing portion 112 can perform the photoelectric conversion processing on the data in the sealed space S0. In this way, the photoelectric conversion device 1 can perform the photoelectric conversion processing on the data in the liquid cooling environment EL while being cooled by the cooling liquid in the liquid cooling environment EL.

It should be noted that the adhesive material 15 may be an epoxy (EPOXY), but is not limited thereto, and any sealing material capable of providing adhesion may serve as the adhesive material 15.

In addition, the soldering material 16 can solder the device base 12 and the device cover 13, such that the device base 12 and the device cover 13 are joined as one piece to prevent the device base 12 and the device cover 13 from separating, thereby maintaining a sealed engagement between the device base 12 and the device cover 13. The soldering material 16 can further solder the device cover 13 and the partition component 14, such that the device cover 13 and the partition component 14 are joined as one piece to prevent separation, thereby maintaining a sealed engagement between the device cover 13 and the partition component 14. The soldering material 16 can further solder the device base 12 and the partition component 14, such that the device base 12 and the partition component 14 are joined as one piece to prevent separation, thereby maintaining a sealed engagement between the device base 12 and the partition component 14.

It should be noted that the device base 12, the device cover 13, and the partition component 14 may optionally be made of a heat-conductive material, such that heat generated by the photoelectric conversion module data processing portion 112 when performing photoelectric conversion processing in the sealed space S0 can be conducted to the liquid cooling environment EL, thereby providing heat dissipation for the operation of the photoelectric conversion device 1.

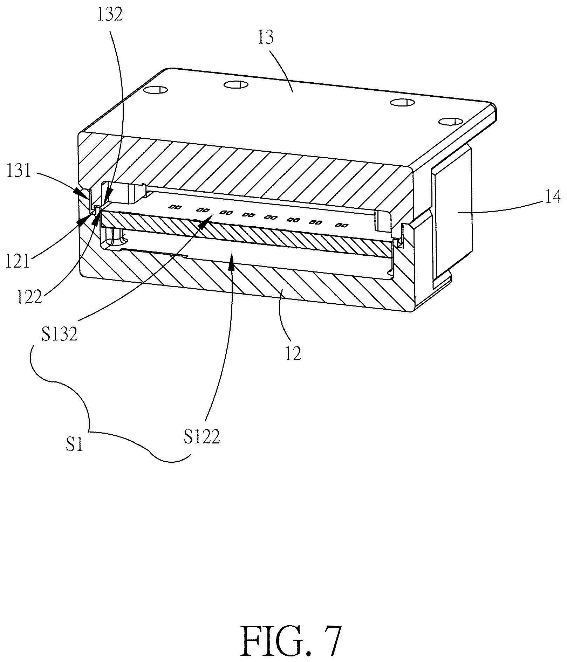

In the embodiments shown in figure 7 to figure 10, the device base 12 comprises a base adhesive receiving trench 121. Correspondingly, the device cover 13 comprises a cover adhesion structure 131. The base adhesive receiving trench 121 is configured to receive the adhesive material 15 to limit the flow range of the adhesive material 15, and the cover adhesion structure 131 enters the base adhesive receiving trench 121, such that the adhesive material 15 bonds the cover adhesion structure 131 within the base adhesive receiving trench 121.

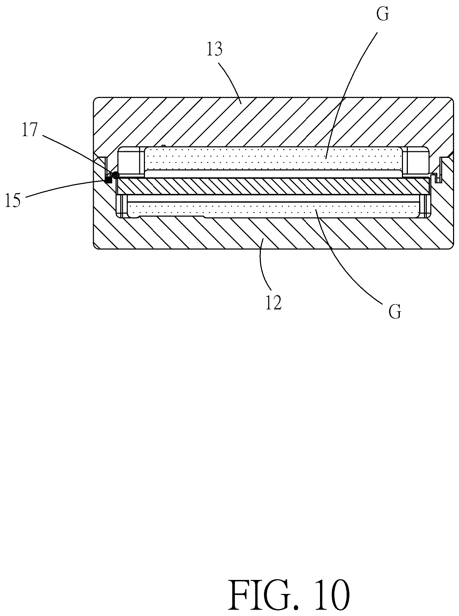

In the embodiment shown in figure 10, the photoelectric conversion device 1 further comprises an elastic material 17, which may be located between the device base 12 and the device cover 13, such that the elastic deformation of the elastic material 17 fills gaps between the device base 12 and the device cover 13, thereby preventing the cooling liquid in the liquid cooling environment EL from infiltrating the sealed space S0 through the gaps between the device base 12 and the device cover 13. Additionally, the elastic material 17 may further be located between the device cover 13 and the partition component 14, such that elastic deformation fills gaps therebetween to prevent cooling liquid from infiltrating the sealed space S0. Furthermore, the elastic material 17 may further be located between the device base 12 and the partition component 14 to fill gaps therebetween by elastic deformation, thereby preventing the cooling liquid in the liquid cooling environment EL from infiltrating the sealed space S0 through gaps between the device base 12 and the partition component 14.

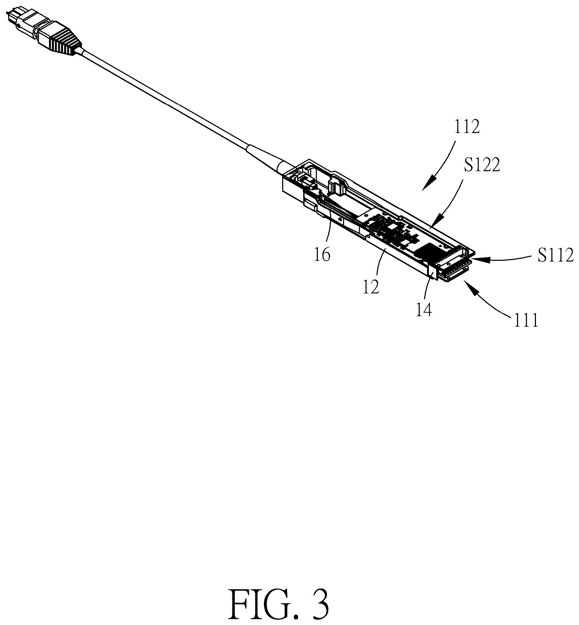

In the embodiments shown in figure 3, figure 4, and figure 10, the device base 12 further comprises a base elastic material insertion trench 122, and the device cover 13 further comprises a cover elastic material insertion trench 132, through which the elastic material 17 is inserted. The insertion of the elastic material 17 through the base elastic material insertion trench 122 and the cover elastic material insertion trench 132 allows the elastic material 17 to fill gaps between the device base 12 and the device cover 13, thereby making the data processing portion base accommodating space S122 become the sealed space S0.

It should be noted that, in the present application, the base elastic material insertion trench 122 may optionally be omitted such that the elastic material 17 is inserted through the cover elastic material insertion trench 132. However, the above is not limiting; for example, the cover elastic material insertion trench 132 may optionally be omitted, such that the elastic material 17 is inserted through the base elastic material insertion trench 122.

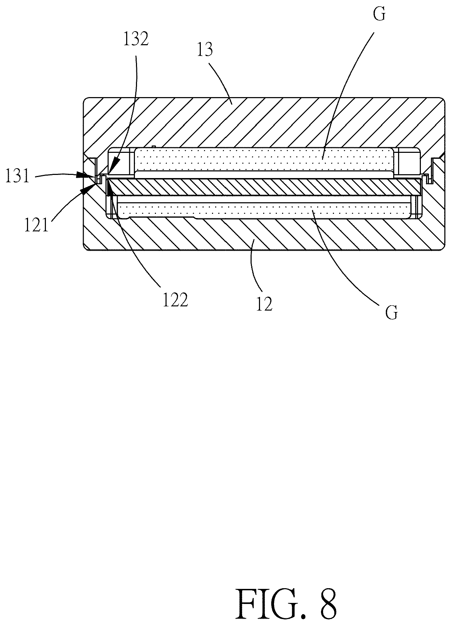

In the embodiments shown in figure 8, figure 10, and figure 13, the photoelectric conversion device 1 further comprises an inert gas G, which is fillable into the sealed space S0, such that the photoelectric conversion module data processing portion 112 can perform the photoelectric conversion processing on the data in an environment in which the inert gas G is present. It should be noted that the inert gas G may be, but is not limited to, helium.

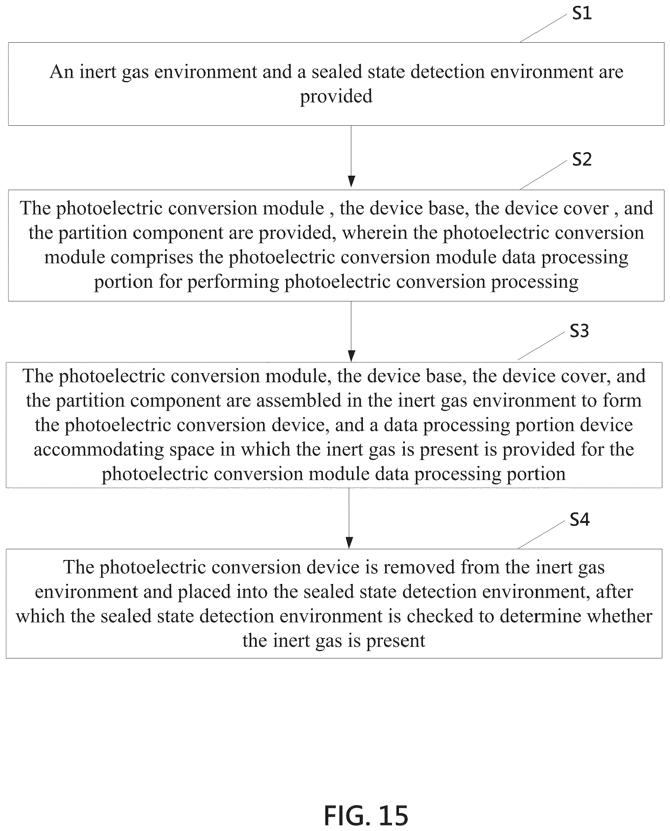

In addition, the present application further provides a manufacturing method of the photoelectric conversion device. As shown in figure 15, the manufacturing method comprises the following steps: first, in step S1, an inert gas environment EG and a sealed state detection environment EC are provided. It should be noted that the inert gas G is present in the inert gas environment EG, while the inert gas G is not present in the sealed state detection environment EC at an initial state. Next, in step S2, the photoelectric conversion module 11, the device base 12, the device cover 13, and the partition component 14 are provided. It should be noted that the photoelectric conversion module 11 comprises the photoelectric conversion module data processing portion 112 for performing photoelectric conversion processing.

Then, in step S3, the photoelectric conversion module 11, the device base 12, the device cover 13, and the partition component 14 are assembled in the inert gas environment EG to form the photoelectric conversion device 1, and a data processing portion device accommodating space S1 in which the inert gas G is present is provided for the photoelectric conversion module data processing portion 112.

Next, the photoelectric conversion device 1 is removed from the inert gas environment EG and placed into the sealed state detection environment EC, after which the sealed state detection environment EC is checked to determine whether the inert gas G is present. If yes, this indicates that the inert gas G present in the data processing portion device accommodating space S1 has leaked, meaning that the data processing portion device accommodating space S1 is not in a sealed state and is susceptible to liquid infiltration; in such case, the photoelectric conversion device 1 may be determined as a defective product and cannot be operated in the liquid cooling environment EL. If no, this indicates that the inert gas G in the data processing portion device accommodating space S1 has not leaked, meaning that the data processing portion device accommodating space S1 is in a sealed state; in such case, the photoelectric conversion device 1 may be determined as a non-defective product and can be operated in the liquid cooling environment EL.

It should be noted that the photoelectric conversion device and its manufacturing method of the present application may optionally omit certain components, structures, or steps, and are not limited to the above embodiments.

For example, the photoelectric conversion device of the present application may optionally comprise: a photoelectric conversion module, a device base, a device cover, a partition component, an adhesive material, and a soldering material. The photoelectric conversion module comprises a photoelectric conversion module coupling portion and a photoelectric conversion module data processing portion. The device base comprises a coupling portion base accommodating space and a data processing portion base accommodating space, and the device base is configured to support the photoelectric conversion module, such that the photoelectric conversion module coupling portion is accommodated in the coupling portion base accommodating space to allow the coupling of a data transmission component in a liquid cooling environment to thereby transmit the data, and the photoelectric conversion module data processing portion is accommodated in the data processing portion base accommodating space. The device cover is combined with the device base to cover the data processing portion base accommodating space. The partition component is located between the device base and the device cover to separate the coupling portion base accommodating space from the data processing portion base accommodating space. The adhesive material bonds the device base and the device cover; the adhesive material further bonds the device cover and the partition component; the adhesive material further bonds the device base and the partition component; and the adhesive material further bonds the partition component and the photoelectric conversion module, such that the data processing portion base accommodating space becomes a sealed space, enabling the photoelectric conversion module data processing portion to perform photoelectric conversion processing on the data in the sealed space. The soldering material solders the device base and the device cover so as to join them into one piece; the soldering material further solders the device cover and the partition component so as to join them into one piece; and the soldering material further solders the device base and the partition component so as to join them into one piece.

In addition, the photoelectric conversion device of the present application may optionally comprise: a photoelectric conversion module, a device base, a device cover, a partition component, an adhesive material, and a soldering material. The photoelectric conversion module comprises a photoelectric conversion module coupling portion and a photoelectric conversion module data processing portion. The device base is configured to support the photoelectric conversion module. The device cover comprises a coupling portion cover accommodating space and a data processing portion cover accommodating space, and the device cover is combined with the device base such that the photoelectric conversion module coupling portion is accommodated in the coupling portion cover accommodating space, and the photoelectric conversion module data processing portion is accommodated in the data processing portion cover accommodating space. The partition component is located between the device base and the device cover to separate the coupling portion cover accommodating space from the data processing portion cover accommodating space. The adhesive material bonds the device base and the device cover; the adhesive material further bonds the device cover and the partition component; the adhesive material further bonds the device base and the partition component; and the adhesive material further bonds the partition component and the photoelectric conversion module, such that the data processing portion cover accommodating space becomes a sealed space, enabling the photoelectric conversion module data processing portion to perform photoelectric conversion processing on the data in the sealed space. The soldering material solders the device base and the device cover so as to join them into one piece; the soldering material further solders the device cover and the partition component so as to join them into one piece; and the soldering material further solders the device base and the partition component so as to join them into one piece.

Further, the manufacturing method of the photoelectric conversion device of the present application may optionally comprise: providing an inert gas environment and a sealed state detection environment, wherein an inert gas is present in the inert gas environment, and the inert gas is not present in the sealed state detection environment at an initial state; providing a photoelectric conversion module, a device base, a device cover, and a partition component, wherein the photoelectric conversion module comprises a photoelectric conversion module data processing portion; assembling the photoelectric conversion module, the device base, the device cover, and the partition component in the inert gas environment to form the photoelectric conversion device and providing a data processing portion device accommodating space in which the inert gas is present for the photoelectric conversion module data processing portion; and removing the photoelectric conversion device from the inert gas environment and placing it into the sealed state detection environment, then detecting whether the inert gas is present in the sealed state detection environment; if yes, this indicates that the data processing portion device accommodating space is not in a sealed state, and the photoelectric conversion device may be defined as a defective product; if no, this indicates that the data processing portion device accommodating space is in a sealed state, and the photoelectric conversion device may be defined as a non-defective product.

In summary, the present application provides a photoelectric conversion device and a manufacturing method thereof. The photoelectric conversion device can be immersed in a cooling liquid to operate in a liquid cooling environment, and comprises a photoelectric conversion module, a device base, a device cover, and a partition component.

The photoelectric conversion module comprises a photoelectric conversion module data processing portion, and the photoelectric conversion module, the device base, the device cover, and the partition component can be bonded and soldered to form a sealed space, in which the photoelectric conversion module data processing portion can perform photoelectric conversion processing on a data.

In this way, when the photoelectric conversion device operates in the liquid cooling environment, infiltration of the cooling liquid into the photoelectric conversion device is prevented, thereby improving the performance and lifespan of the photoelectric conversion device.

The examples above are only illustrative to explain principles and effects of the invention, but not to limit the invention. It will be apparent to those skilled in the art that modifications and variations can be made without departing from the spirit and scope of the invention. Therefore, the protection range of the rights of the invention should be as defined by the appended claims.

## Claims

1. A photoelectric conversion device configured to be coupled with a data transmission component in a liquid cooling environment so as to transmit data and perform a photoelectric conversion process on the data, wherein the photoelectric conversion device comprises:
at least one photoelectric conversion module comprising a photoelectric conversion module coupling portion and a photoelectric conversion module data processing portion;
at least one device base comprising a coupling portion base accommodating space and a data processing portion base accommodating space, the device base being configured to support the photoelectric conversion module, such that the photoelectric conversion module coupling portion is accommodated in the coupling portion base accommodating space and is coupled with the data transmission component in the liquid cooling environment to transmit the data, and the photoelectric conversion module data processing portion is accommodated in the data processing portion base accommodating space;
at least one device cover assembled with the device base to cover the data processing portion base accommodating space;
at least one partition component located between the device base and the device cover to separate the coupling portion base accommodating space from the data processing portion base accommodating space;
at least one adhesive material configured to adhere the device base to the device cover, adhere the device cover to the partition component, adhere the device base to the partition component, and adhere the partition component to the photoelectric conversion module, so as to make the data processing portion base accommodating space become a sealed space and to allow the photoelectric conversion module data processing portion to perform the photoelectric conversion process on the data in the sealed space; and
at least one soldering material configured to solder the device base and the device cover so as to join the device base and the device cover into a single piece, the soldering material further being configured to solder the device cover and the partition component so as to join the device cover and the partition component into a single piece, and the soldering material further being configured to solder the device base and the partition component so as to join the device base and the partition component into a single piece.

2. The photoelectric conversion device of claim 1, wherein the adhesive material is an epoxy resin (EPOXY).

3. The photoelectric conversion device of claim 1, wherein the photoelectric conversion device is an SFP series (Small Form-Factor Pluggable), QSFP series (Quad Small Form-Factor Pluggable), QSFP-DD series (Quad Small Form-Factor Pluggable Double Density), OSFP series (Octal Small Form-factor Pluggable), LPO series, ELSFP series, CFP series, CPO series, COBO series or OSFP-XD series photoelectric conversion device.

4. The photoelectric conversion device of claim 1, wherein the device base further comprises a base adhesive receiving trench, and the device cover comprises a cover adhesion structure, wherein the base adhesive receiving trench is configured to receive the adhesive material, and the cover adhesion structure is configured to enter the base adhesive receiving trench to be adhered to the adhesive material in the base adhesive receiving trench.

5. The photoelectric conversion device of claim 1, further comprising an elastic material located between the device base and the device cover to fill a gap between the device base and the device cover, so as to further make the data processing portion base accommodating space become the sealed space.

6. The photoelectric conversion device of claim 5, wherein the elastic material is further provided between the device cover and the partition component to fill a gap between the device cover and the partition component; and the elastic material is further provided between the device base and the partition component to fill a gap between the device base and the partition component, so as to further make the data processing portion base accommodating space become the sealed space.

7. The photoelectric conversion device of claim 5, wherein the device base further comprises a base elastic material insertion trench configured to be filled with the elastic material.

8. The photoelectric conversion device of claim 5, wherein the device cover further comprises a cover elastic material insertion trench configured to be filled with the elastic material.

9. The photoelectric conversion device of claim 1, further comprising an inert gas configured to fill the sealed space, so as to allow the photoelectric conversion module data processing portion to perform the photoelectric conversion process on the data in an environment with the inert gas.

10. The photoelectric conversion device of claim 9, wherein the inert gas is helium.

11. A photoelectric conversion device configured to be coupled with a data transmission component in a liquid cooling environment so as to transmit data and perform a photoelectric conversion process on the data, wherein the photoelectric conversion device comprises:
at least one photoelectric conversion module comprising a photoelectric conversion module coupling portion and a photoelectric conversion module data processing portion;
at least one device base configured to support the photoelectric conversion module;
at least one device cover comprising a coupling portion cover accommodating space and a data processing portion cover accommodating space, and the device cover being assembled with the device base, such that the photoelectric conversion module coupling portion is accommodated in the coupling portion cover accommodating space, and the photoelectric conversion module data processing portion is accommodated in the data processing portion cover accommodating space;
at least one partition component located between the device base and the device cover to separate the coupling portion cover accommodating space from the data processing portion cover accommodating space;
at least one adhesive material configured to adhere the device base to the device cover, adhere the device cover to and the partition component, adhere the device base to the partition component, and adhere the partition component to the photoelectric conversion module, so as to make the data processing portion cover accommodating space become a sealed space and to allow the photoelectric conversion module data processing portion to perform the photoelectric conversion process on the data in the sealed space; and
at least one soldering material configured to solder the device base and the device cover so as to join the device base and the device cover into a single piece, the soldering material further being configured to solder the device cover and the partition component so as to join the device cover and the partition component into a single piece, and the soldering material further being configured to solder the device base and the partition component so as to join the device base and the partition component into a single piece.

12. A manufacturing method of a photoelectric conversion device, comprising:
providing an inert gas environment and a sealed state detection environment, with an inert gas being contained in the inert gas environment, wherein the inert gas is not contained in the sealed state detection environment initially;
providing at least one photoelectric conversion module, at least one device base, at least one device cover, and at least one partition component, wherein the photoelectric conversion module comprises a photoelectric conversion module data processing portion;
allowing the photoelectric conversion module, the device base, the device cover, and the partition component to be assembled in the inert gas environment to form the photoelectric conversion device, and providing the photoelectric conversion device with a data processing portion device accommodating space for accommodating the photoelectric conversion module data processing portion, wherein the inert gas is present in the data processing portion device accommodating space; and
allowing the photoelectric conversion device to leave the inert gas environment and enter the sealed state detection environment, and detecting whether the inert gas is found in the sealed state detection environment; wherein if the inert gas is found, this indicates that the data processing portion device accommodating space is not sealed and the photoelectric conversion device is a defective product; if the inert gas is not found, this indicates that the data processing portion device accommodating space is sealed, and the photoelectric conversion device is a qualified product.
